# FASCICULE DE BREVET EUROPEEN

(11) **EP 1 223 076 B1**
(45) Date de publication et mention de la délivrance du brevet: **15.03.2006**
(21) Numéro de dépôt: 02370003.2
(22) Date de dépôt: 16.01.2002
(51) Int. Cl.: B60N 2/60

(54) **Housse pour véhicule automobile comportant un unique type de fente**
Sitzbezug für Kraftfahrzeug mit einer einzigen Schlitzart
Seat cover for automotive vehicle with an unique opening type

(30) Priorité: 16.01.2001 FR 0100545
(43) Date de publication de la demande: 17.07.2002
(73) Titulaire: Gery Trentesaux Industries, S.A., 59100 Roubaix (FR)
(72) Inventeur: Trentesaux, Géry D., 59800 Lille (FR)
(74) Mandataire: Hennion, Jean-Claude

(56) Documents cités:
- EP-A- 0 071 388
- EP-A- 0 727 333
- EP-A- 0 893 301
- EP-A- 0 926 014
- FR-A- 2 774 957

## Description

La présente invention concerne une housse pour siège qui présente une ou plusieurs fentes destinées au passage d'un accessoire tel que par exemple, un appui-tête, une tablette ou plus particulièrement d'un sac gonflable latéral encore dénommé **«** air-bag ».

Les sièges en particulier avant de certains types de véhicules sont équipés de divers accessoires tels que par exemple, des appui-tête, des tablettes disposées à l'arrière du siège et des sacs gonflables latéraux qui sont logés dans une coque rigide disposée sur le côté du siège, le sac servant à protéger le passager en se déployant latéralement à ce dernier en cas de choc. La présence de ces accessoires a donc nécessité une adaptation des housses existantes en sorte d'une part de permettre une mise en place aisée des housses sur les sièges et de garantir l'aspect esthétique du siège recouvert.

La demande de brevet EP-A-0 071 388 décrit une housse pour siège selon préambule de la revendication 1.

Le demande de brevet EP 0 926 014 s'est intéressée aux sièges comportant des sacs gonflables latéraux La housse décrite dans ce document comporte une fente latérale qui est munie de moyens de fermeture qui s'étendent de manière continue le long des bords de la fente. Les moyens de fermeture sont prévus pour s'ouvrir sous l'action du déploiement du sac gonflable. Ce type de fente permet effectivement le fonctionnement du sac gonflable tout en préservant l'aspect esthétique du siège recouvert en ce sens que la housse ne baille pas au niveau de la fente latérale. En revanche du fait de la présence de moyens de fermeture disposés de manière continue, la fente décrite ne peut pas servir au passage d'un accessoire quel qu'il soit.

S'agissant du passage des accessoires, la demande de brevet FR 2 774 957 propose notamment dans le cas d'une tablette disposée au niveau du dossier d'un siège avant, d'équiper une housse d'une fente et d'un manchon rétractable apte à recouvrir la fente. Lorsque le siège est effectivement équipé d'une tablette, le manchon est roulé ou vient s'insérer entre le dossier et la tablette. Lorsque le siège n'est pas équipé de tablette, la fente est masquée de manière esthétique par le manchon.

Le but que s'est fixé la présente invention est de proposer une housse pour siège munie d'un seul type de fente qui permet selon la position de la fente le passage d'un accessoire ou le fonctionnement d'un sac gonflable.

Ce but est atteint au moyen d'une housse pour siège selon la revendication 1. Les moyens de fermeture consistent en 2n pièces de petites dimensions, n premières pièces sont fixées sur le premier bord de la fente à une distance prédéterminée d l'une de l'autre et n secondes pièces sont fixées sur le second bord de la fente en regard desdites n premières pièces, les premières pièces étant aptes à s'emboîter à force et de manière réversible dans les secondes pièces.

Ainsi, les pièces de fermeture étant disposées de manière discrète, c'est-à-dire non continue, il est possible en choisissant leur nombre 2n et donc leur espacement d sur les bords de la fente de permettre le passage d'un accessoire, quel que soit le type d'accessoire et également d'ajuster la force nécessaire à séparer les bords de la fente pour qu'un sac gonflable puisse fonctionner correctement tout en assurant une pose facile de la housse et un aspect esthétique satisfaisant du siège recouvert comme cela le sera plus amplement expliqué ultérieurement.

Selon un mode de réalisation particulier, les premières et les secondes pièces étant emboîtées, les deux bords opposés de la fente sont écartés l'un de l'autre d'une distance e comprise entre 2 mm et 5mm ce qui peut permettre le passage d'un accessoire tout en maintenant les deux bords de la fente reliés et en évitant donc ainsi tout bâillement de cette dernière.

Lorsque le dossier du siège étant équipé d'un sac gonflable, la housse présente de préférence une fente latérale et le nombre n de pièces de fermeture de la fente latérale est déterminé en sorte d'obtenir le déboîtement spontané des premières et secondes pièces sous l'action de déploiement du sac gonflable. Ainsi, selon l'invention la force nécessaire à l'ouverture des moyens de fermeture peut être déterminée selon plusieurs paramètres, la distance séparant les bords de la fente, le nombre de pièces formant les moyens de fermeture, la distance les séparant les unes des autres et également la structure de ces pièces.

Ainsi, il est possible, selon l'invention de choisir la distance d en sorte de permettre le passage d'un accessoire ; cette même distance d pouvant également permettre l'ouverture de la fente sous l'effet du déploiement d'un sac gonflable.

Selon l'invention, les premières et les secondes pièces peuvent être directement fixées sur le textile de la housse, la fente étant ainsi déterminée par l'intervalle séparant les deux parties de la housse. Il est également possible selon l'invention que les premières pièces soient fixées sur un premier ruban définissant le premier bord de la fente, les secondes pièces étant fixées sur un second ruban définissant le second bord de la fente.

La présente invention, ses caractéristiques et les différents avantages qu'elle procure apparaîtront mieux à la lecture de la description qui suit et fait référence aux dessins annexés d'un mode particulier de réalisation de la présente invention décrit à titre d'exemple non limitatif et sur lesquels :
- la figure 1 représente une vue du dessus d'une fente équipant une housse pour siège selon l'invention ;
- la figure 2 représente les moyens de fixation utilisés dans le mode de réalisation particulier représenté sur la figure 1 ;
- la figure 3 représente une vue en coupe d'un appui-tête traversant une fente de la housse ; et
- la figure 4 représente une vue générale d'un siège revêtu de la housse pour siège de l'invention.

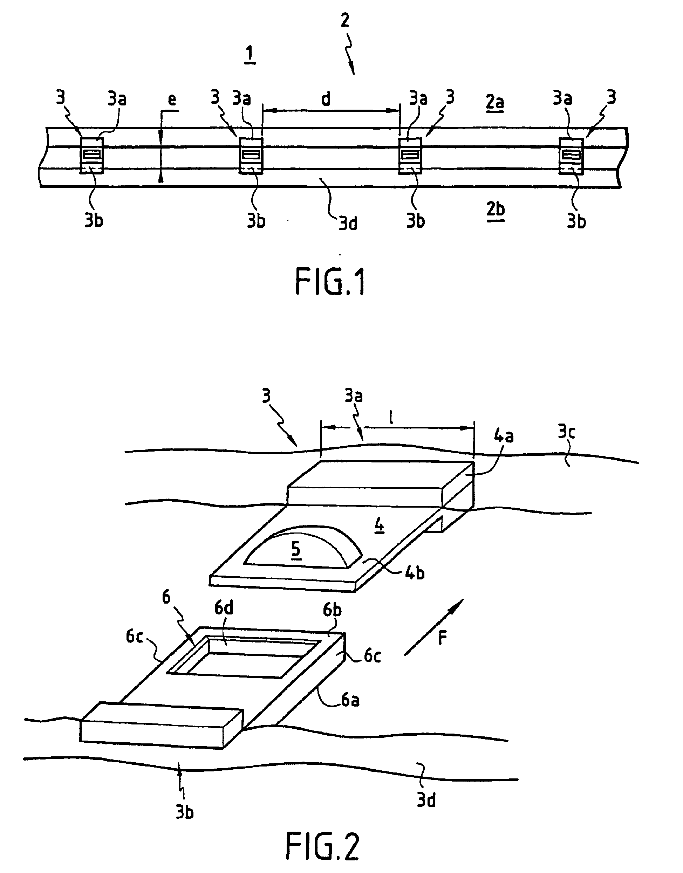

En référence à la figure 1, la housse 1 est équipée d'une fente 2 qui comporte deux bords 2a et 2b. Les moyens de fermeture 3 qui seront plus amplement détaillés en référence à la figure 2 sont constitués de n premières pièces 3a solidaires d'un ruban 3c fixé sur le bord 2a et de n secondes pièces 3b solidaires d'un second ruban 3d fixé sur le bord 2b de la fente 2 et disposées en regard des n premières pièces 3a. Dans l'exemple particulier représenté, la distance d séparant deux premières pièces 3a ou deux secondes pièces 3b est comprise entre 30mm et 60mm et par exemple sensiblement égale à 40mm.

En référence à la figure 2, les moyens de fermeture 3 utilisés dans le mode de réalisation particulier représenté sur les figures 1 à 4 va maintenant être décrit. Les moyens de fermeture 3 sont constitués de n premières pièces 3a et de n secondes pièces 3b. Les premières pièces 3a sont formées chacune d'une plaque 4 dont une extrémité 4a est solidaire d'un ruban 3c correspondant au bord 2a de la fente 2 et dont l'autre extrémité 4b est pourvue d'un bossage 5. La largeur 1 de la plaque 4 est inférieure ou égale à la distance e qui sépare les deux bords des rubans 3c et 3d lorsque les premières pièces 3a sont emboîtées dans les secondes pièces 3b, c'est-à-dire lorsque les moyens de fermeture 3 sont dans leur position fermée. La distance e est comprise entre 2mm et 5mm et par exemple sensiblement égale à 4mm. Les secondes pièces 3b qui sont fixées sur un second ruban 3d correspondant au second bord 2b de la fente sont constituées d'un logement 6 formé par une aile inférieure 6a, une aile supérieure 6b et deux ailes latérales 6c. L'aile supérieure 6a est pourvue d'une ouverture 6d dans laquelle vient s'encliqueter en force et de manière réversible le bossage 5 de la première pièce 3a. L'insertion du bossage 5 entre les ailes inférieure et supérieure 6a et 6b provoque l'écartement l'une de l'autre de ces dernières du fait de l'élasticité du matériau qui les constitue. Les deux ailes 6a et 6b se rapprochant ensuite lorsque le bossage 5 vient se loger dans l'ouverture 6d ce qui permet de maintenir ce dernier de manière réversible, les deux faces 6a et 6b pouvant s'écarter élastiquement l'une de l'autre pour relâcher le bossage 5 sous l'action d'une force F s'exerçant dans le plan de la fente et perpendiculairement à cette dernière.

Selon une variante non représentée, les premières et les secondes pièces de fermeture sont fixées directement sur la housse 1, les bords 2a et 2b de la fente 2 étant formés par la housse et non les rubans 3b et 3c précités .

Quel que soit le type de moyen de fermeture utilisé, le choix du nombre n des premières et des secondes pièces de fermeture et donc de leur espacement d le long de la fente 2 permet de moduler la force nécessaire à la séparation des deux bords 2a et 2b de la fente 2. En d'autres termes, l'homme du métier est capable de choisir le nombre n de moyens de fermeture en sorte de permettre le désemboîtement des n premières pièces et des n secondes pièces des moyens de fermeture sous l'action du déploiement d'un sac gonflable latéral. Cette force nécessaire à la séparation des deux bords de la fente doit néanmoins rester suffisante pour permettre la mise en place de la housse de siège de l'invention sans provoquer l'ouverture des moyens de fermeture.

Par ailleurs, les deux bords de la fente étant toujours maintenus ensembles dans un même plan, l'aspect esthétique du siège revêtu de la housse de l'invention est préservé : la fente 2 ne baille pas.

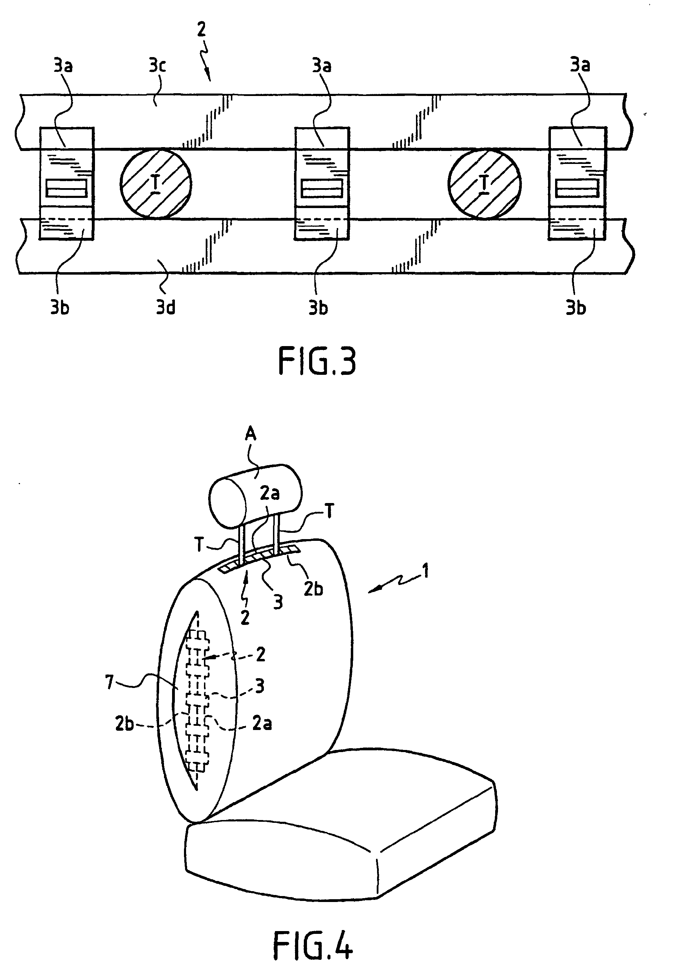

En référence à la figure 3, l'utilisation de la housse pour siège de l'invention permet de laisser passer un accessoire tel qu'un appui-tête A qui comporte deux tiges T. Sur la figure 3, la fente 2 de longueur réduite ne comporte que trois premières pièces 3a et trois secondes pièces 3b de fermeture. Ces pièces 3a et 3b sont disposées le long de la fente 2 en sorte que lorsque la housse 1 est positionnée sur le siège, les tiges T de l'appui-tête A passent chacune entre deux pièces 3a et 3b assemblées. La présence de moyens de fermeture 3 entre les deux tiges T permet d'éviter tout bâillement inesthétique de la fente 2. Dans le mode de réalisation particulier ici représenté, les deux rubans 3c et 3d qui sont fixés chacun sur un bord de la fente 2 sont espacés d'une distance e même lorsque les premières pièces 3a sont emboîtées dans les secondes pièces 3b. Cette distance e est de l'ordre de 3mm, ce qui permet de faciliter le passage des tiges T et d'éviter que les rubans et/ou les bords de la fente 2 ne se soulèvent de manière inesthétique et recouvrent partiellement le bas des tiges T.

Lors de la pose de la housse de l'invention, les premières pièces 3a sont désolidarisées des secondes pièces 3b en sorte de permettre le passage de l'appui-tête A à travers la fente 2. Les premières pièces 3a sont ensuite insérées dans les secondes pièces 3b en sorte de fermer les moyens de fermeture 3.

Il est également possible d'utiliser ce type de fente pour laisser passer une tablette telle que précédemment décrite. Dans ce cas, la fente 2 sera disposée au dos de la housse et sa longueur sera suffisante pour permettre le passage de la tablette. Lors de la pose, les premières pièces 3a seront désolidarisées des secondes pièces 3b en sorte de pouvoir écarter les deux bords de la fente 2 pour le passage de la tablette. Les moyens de fermeture 3 pourront ensuite être fermés dans l'interstice qui sépare le bord de la tablette fixé au dossier de la surface du dossier lui-même.

En référence à la figure 4, la housse 1 est équipée d'une fente latérale 2 recouvrant un sac gonflable latéral et d'une seconde fente 2' pour le passage d'un appui-tête A. La fente 2 est équipée dans le mode de réalisation particulier représenté d'un rabat de recouvrement 7 qui permet de couvrir la fente 2 et les moyens de fermeture 3.

## Revendications

1. Housse pour siège présentant au moins une fente et des moyens de fermeture de ladite ou desdites fentes lesdits moyens de fermeture consistent en 2n pièces de petites dimensions, disposées de manière discrète, les n premières pièces sont fixées sur le premier bord de la fente à une distance prédéterminée d l'une de l'autre et les n secondes pièces sont fixées sur le second bord de la fente en regard desdites n premières pièces, lesdites premières pièces étant aptes à s'emboîter à force et de manière réversible dans lesdites secondes pièces, **caractérisée en ce que** les premières et les secondes pièces étant emboîtées, les deux bords de la fente sont écartés l'un de l'autre d'une distance e.

2. Housse pour siège selon la revendication 1, **caractérisée en ce que** la distance e est comprise entre 2 mm et 5mm.

3. Housse pour siège selon la revendication 1 ou 2, **caractérisée en ce que** la distance d est comprise entre 30 mm et 60 mm.

4. Housse pour un siège selon l'une quelconque des revendications 1 à 3, **caractérisée en ce que** le dossier dudit siège étant équipé d'un sac gonflable, ladite housse présente une fente latérale et **en ce que** le nombre n de pièces de fermeture de ladite fente latérale est déterminé en sorte d'obtenir le déboîtement spontané desdites premières et secondes pièces sous l'action de déploiement dudit sac gonflable.

5. Housse pour siège selon l'une quelconque des revendications 1 à 3, **caractérisée en ce que** ladite fente étant destinée au passage d'un accessoire, la distance d est déterminée en sorte de permettre le passage dudit accessoire.

6. Housse selon la revendication 5, **caractérisée en ce que** ledit accessoire étant un appui-tête comportant deux tiges, ladite fente comporte au moins 3 paires de pièces de fermeture, chaque paire étant espacée de la suivante d'une distance d supérieure ou égale au diamètre desdites tiges et les trois paires étant disposées au moins dans la zone centrale de ladite fente en sorte qu'une paire est au milieu des deux tiges et les deux autres paires à l'extérieur des deux tiges lorsque la housse est mise en place sur le siège.

7. Housse pour siège selon l'une quelconque des revendications 1 à 6, **caractérisée en ce que** lesdites premières pièces sont fixées sur un premier ruban définissant un premier bord de la fente, les secondes pièces étant fixées sur un second ruban définissant un second bord de la fente.

8. Housse selon l'une quelconque des revendications 1 à 7, **caractérisée en ce que** lesdites premières pièces sont constituées d'une plaque terminée par un bossage, lesdites secondes pièces comprenant deux ailes délimitant un logement pour ladite plaque et aptes à s'écarter l'une de l'autre par l'entrée en force dudit bossage dans ledit logement.

9. Housse selon l'une quelconque des revendications 1 à 8, **caractérisée en ce qu'**elle comporte un rabat de recouvrement de la fente et des 2n pièces de fermeture.

## Claims

1. A seat cover having at least one opening and resources to close the said opening(s), where the said closure resources consist of 2n parts of small dimensions, which are positioned in a discreet manner. The first n parts are attached to the first edge of the opening at a predetermined distance d from each other, and the second n parts are attached to the second edge of the opening opposite to the said first n parts, with the said first parts being designed to be force-fitted in a reversible manner into the said second parts, **characterised in that** when the first and second parts are closed together, the two edges of the opening are separated from each other by a given distance e.

2. A seat cover according to claim 1, **characterised in that** distance e is between 2 mm and 5mm.

3. A seat cover according to claim 1 or 2, **characterised in that** distance d is between 30 mm and 60 mm.

4. A cover for a seat according to any of claims 1 to 3, **characterised in that** when the back of the said seat is equipped with an airbag, the said cover has a side opening, and **in that** the number n of closure parts of the said side opening is determined so as to allow the spontaneous separation of the said first and second parts under the action of deployment of the said airbag.

5. A seat cover according to any of claims 1 to 3, **characterised in that** when the said opening is intended for the passage of an accessory, the distance d is determined so as to allow passage of the said accessory.

6. A cover according to claim 5, **characterised in that** when the said accessory is a headrest with two support posts, the said opening has at least 3 pairs of closure parts, each pair being spaced from the next by a distance d which is equal to or greater than the diameter of the said support posts, with the three pairs being positioned at least in the central zone of the said opening so that one pair is located between the two support posts and the other two pairs are located outside the two support posts when the cover is installed on the seat.

7. A seat cover according to any of claims 1 to 6, **characterised in that** the said first parts are attached to a first tape forming a first edge of the opening, with the second parts being attached to a second tape forming a second edge of the opening.

8. A cover according to any of claims 1 to 7, **characterised in that** the said first parts are composed of a plate ending in a boss, and where the said second parts include two wings outlining a slot for the said plate, and capable of being separated from each other by the entry by force of the said boss into the said slot.

9. A cover according to any of claims 1 to 8, **characterised in** this that it includes a flap to cover the opening and the 2n closure parts.

## Patentansprüche

1. Sitzbezug, der wenigstens einen Schlitz und Schließmittel des oder der Schlitze aufweist, wobei die Schließmittel aus 2n Stücken von kleinen Abmessungen bestehen, die unauffällig angeordnet sind, die n ersten Stücke auf dem ersten Rand des Schlitzes bei einem vorbestimmten Abstand d zueinander befestigt sind und die n zweiten Stücke auf dem zweiten Rand des Schlitzes gegenüber den n ersten Stücken befestigt sind, wobei die ersten Stücke geeignet sind, sich mit Kraft und reversibel in die zweiten Stücke einzufügen, **dadurch gekennzeichnet, daß** da die ersten und zweiten Stücke ineinander gefügt sind, die beiden Ränder des Schlitzes voneinander mit einem Abstand e beabstandet sind.

2. Sitzbezug nach Anspruch 1, **dadurch gekennzeichnet, daß** der Abstand e zwischen 2 mm und 5 mm liegt.

3. Sitzbezug nach Anspruch 1 oder 2, **dadurch gekennzeichnet, daß** der Abstand d zwischen 30 mm und 60 mm liegt.

4. Sitzbezug nach einem der Ansprüche 1 bis 3, **dadurch gekennzeichnet, daß** da die Rückenlehne des Sitzes mit einem aufblasbaren Beutel ausgerüstet ist, der Sitzbezug einen Seitenschlitz aufweist und **dadurch**, daß die Anzahl n von Stücken zum Schließen des Seitenschlitzes derart bestimmt ist, daß ein spontanes Auseinandergehen der ersten und zweiten Stücke unter Wirkung eines Ausbreitens des aufblasbaren Beutels erhalten wird.

5. Sitzbezug nach einem der Ansprüche 1 bis 3, **dadurch gekennzeichnet, daß** da der Schlitz am Durchgang eines Zubehörteils vorgesehen ist, der Abstand d derart bestimmt ist, daß der Durchgang des Zubehörteils zugelassen wird.

6. Bezug nach Anspruch 5, **dadurch gekennzeichnet, daß** da das Zubehörteil eine Kopfstütze ist, die zwei Stangen umfasst, der Schlitz wenigstens drei Paare von Schließstücken umfaßt, wobei jedes Paar vom nachfolgenden mit einem Abstand d größer oder gleich dem Durchmesser der Stangen beabstandet ist, und drei Paare wenigstens in der zentralen Zone des Schlitzes derart angeordnet sind, daß ein Paar in der Mitte der beiden Stangen liegt und die beiden anderen Paare außerhalb der Stangen, wenn der Bezug auf dem Sitz plaziert wird.

7. Sitzbezug nach einem der Ansprüche 1 bis 6, **dadurch gekennzeichnet, daß** die ersten Stücke auf einem ersten Band befestigt sind, das einen ersten Rand des Schlitzes definiert, wobei die zweiten Stücke auf einem zweiten Band befestigt sind, das einen zweiten Rand des Schlitzes definiert.

8. Bezug nach einem der Ansprüche 1 bis 7, **dadurch gekennzeichnet, daß** die ersten Stücke aus einer Platte bestehen, die durch eine Bosse enden, wobei die zweiten Stücke zwei Flügel umfassen, die eine Aufnahme für die Platte begrenzen und geeignet sind, einander durch den Eintritt von Kraft der Bosse in die Aufnahme auseinanderzuklaffen.

9. Sitzbezug nach einem der Ansprüche 1 bis 8, **dadurch gekennzeichnet, daß** er eine Abdecklasche des Schlitzes und der 2n Schließstücke umfaßt.
